# EUROPEAN PATENT APPLICATION

(11) **EP 4 324 943 A1**
(43) Date of publication of application: **21.02.2024**
(21) Application number: 22815922.4
(22) Date of filing: 24.05.2022
(51) Int. Cl.: C21D 8/12, C22C 38/00, C22C 38/60, H01F 1/147

(54) **GRAIN-ORIENTED ELECTROMAGNETIC STEEL SHEET**

(30) Priority: 31.05.2021 JP 2021091834
(71) Applicant: JFE Steel Corporation, Tokyo 100-0011 (JP)
(72) Inventor: ICHIHARA, Yoshihisa, Tokyo 100-0011 (JP); OMURA, Takeshi, Tokyo 100-0011 (JP); SENDA, Kunihiro, Tokyo 100-0011 (JP)
(74) Representative: Hoffmann Eitle
(86) International application number: PCT/JP2022/021301
(87) International publication number: WO 2022/255172

(57) **Abstract**

Disclosed is a grain-oriented electrical steel sheet that exhibits excellent transformer characteristics and that has low iron loss and low magnetostriction properties. The grain-oriented electrical steel sheet has a magnetic flux density B-magnetostriction waveform λ, referred to as a butterfly curve, when excited to 1.5 T or more, such that an amount of steel sheet elongation (Δλ) with a magnetic flux density B ranging from 1.0 T to 1.5 T is 0.010 × 10⁻⁶ or more and 0.240 × 10⁻⁶ or less, and a length of a closure domain in the rolling direction, referred to as a closure domain width, is 20 µm or more and 240 µm or less.

## Description

### TECHNICAL FIELD

This disclosure relates to a grain-oriented electrical steel sheet that is suitable as an iron core material for transformers and the like.

### BACKGROUND

Grain-oriented electrical steel sheets are used, for example, as iron core material for transformers. In such transformers, energy loss and noise need to be suppressed, and the iron loss of the grain-oriented electrical steel sheet affects the energy loss, while its magnetostrictive property affects the noise. Especially in recent years, from the viewpoint of energy conservation and/or environmental regulations, there is a strong need to reduce the energy loss in transformers and the noise during operation of transformers. Therefore, it is extremely important to develop grain-oriented electrical steel sheets with good iron loss and magnetostrictive properties.

The iron loss of grain-oriented electrical steel sheets is mainly composed of hysteresis loss and eddy current loss. Methods to reduce hysteresis loss have been developed, such as forming crystal grains highly aligned with the (110)[001] orientation, called Goss orientation, in the rolling direction of steel sheets, reducing impurities in steel sheets, and so on. Methods to improve eddy current losses have been developed, such as increasing the electrical resistance of steel sheets by adding Si, applying film tension in the rolling direction of steel sheets, and so on.

However, these methods have manufacturing limitations when pursuing even lower iron loss in grain-oriented electrical steel sheets.

Therefore, magnetic domain refining technology has been developed as a method to pursue even lower iron loss in grain-oriented electrical steel sheets. Magnetic domain refining is a technique to reduce iron loss, especially eddy current loss, of grain-oriented electrical steel sheets by physically introducing non-uniformity of magnetic flux into the steel sheets after final annealing or baking of insulating coating by forming grooves or introducing local strain, etc., to refine the width of 180° magnetic domains (main magnetic domains) formed along the rolling direction.

For example, JP H6-22179 B (PTL 1) proposes a technology to reduce iron loss from 0.80 W/kg or more to 0.70 W/kg or less by introducing linear grooves of 300 µm or less in width and 100 µm or less in depth on the steel sheet surface.

In addition, JP H7-192891 A (PTL 2) proposes a method to reduce the iron loss (W_{17/50}), with a maximum magnetic flux density of 1.7 T when excited at a frequency of 50 Hz, to 0.680 W/kg for a steel sheet that has a magnetic flux density (Bs) of 1.935 T when excited with a magnetizing force of 800 A/m, by irradiating a plasma flame in the width direction of the steel sheet surface after secondary recrystallization and introducing local thermal strain.

The method of forming linear grooves as described in PTL 1 is called heat-resistant type magnetic domain refining, because the magnetic domain refining effect is not lost even by performing stress relief annealing after iron core formation. On the other hand, the method of introducing thermal strain as described in PTL 2 is referred to as non-heat-resistant type magnetic domain refining, because the effect of introducing thermal strain is no longer obtained by stress relief annealing.

In this respect, non-heat-resistant type magnetic domain refining can significantly reduce eddy current losses by introducing local strain in steel sheets. On the other hand, non-heat-resistant type magnetic domain refining is known to cause degradation of hysteresis loss property and magnetostriction due to the introduction of such strain.

Therefore, for the development of grain-oriented electrical steel sheets with better iron loss and magnetostrictive properties than before, and for the development of transformers with better energy loss and noise properties than before, optimization of the pattern of introduction of closure domains is required.

### CITATION LIST

### Patent Literature

PTL 1: JP H6-22179 B
PTL 2: JP H7-192891 A
PTL 3: JP 2016-166419 A
PTL 4: WO 2020/158732 A

### SUMMARY

### (Technical Problem)

Since the distribution of closure domains greatly affects the ability of non-heat-resistant magnetic domain refining, it is advantageous to optimize the pattern of introduction of closure domains to provide grain-oriented electrical steel sheets that exhibit excellent transformer characteristics and have both low iron loss and low magnetostriction. To this end, it is necessary to have an accurate understanding of closure domains. Until now, many means of measuring the three-dimensional distribution of closure domains have been proposed, but they all have the following problems.

For example, JP 2016-166419 A (PTL 3) describes a technique for observing the cross section of a steel sheet sheared along the rolling direction using a Kerr effect microscope. However, such a measurement method has problems in that strain is included in the observation plane due to mirror polishing, which is necessary for the preparation of a sample for observation, and that the magnetic domain structure at the observation point becomes different from the actual one upon exposure of a cross-section. More importantly, the observation provides only a small portion of the closure domains introduced into the steel sheet, which is insufficient for estimating the three-dimensional distribution.

In addition, WO 2020/158732 A (PTL 4) describes a method of estimating the amount of closure domains introduced from the difference waveforms of the magnetostriction waveforms before and after stress relief annealing, focusing on the time-magnetostriction waveform when excited up to 1.7 T. However, with excitation up to 1.7 T, it is difficult to accurately estimate the amount of closure domains introduced because not only magnetostrictive vibration due to the annihilation of closure domains but also magnetostrictive vibration components due to magnetization rotation of the main magnetic domains caused by misorientation of crystals from the rolling direction are included.

As mentioned above, although there is a need for a means to optimize the distribution of closure domains in order to develop grain-oriented electrical steel sheets with excellent iron loss and noise properties, it has been difficult to meet the higher performance requirements in recent years by identifying closure domains based on the methods described in PTLs 3 and 4.

The present inventors examined the way to optimize the distribution of closure domains, and found means for properly using a butterfly curve as described below. An object of the present disclosure is to provide a grain-oriented electrical steel sheet that exhibits excellent transformer characteristics and that has both low iron loss and low magnetostriction properties by using the means.

### (Solution to Problem)

The present inventors made intensive studies on the solution to address the above-described issues.

Non-heat-resistant type magnetic domain refining is a technique to control magnetic domains by introducing strain into steel sheets to create a localized stress field. Therefore, in order to develop a grain-oriented electrical steel sheet with lower iron loss and noise than before, the present inventors focused on the distribution of stress introduced into the steel sheet and the magnetization direction of closure domains, and investigated their effects on magnetic properties.

In such non-heat-resistant type magnetic domain refining, energy beam is irradiated to a grain-oriented electrical steel sheet in the direction orthogonal to the rolling direction (sheet transverse direction) to introduce localized thermal strain. At this time, compressive stress in the rolling direction remains at the energy beam irradiation points.

In a grain-oriented electrical steel sheet, crystal grains with Goss orientation, (110)[001], which is the easy magnetization axis, are highly aligned with the rolling direction. Accordingly, when compressive stress is applied in the rolling direction, magnetic domains with a magnetization direction along the sheet transverse direction (i.e., closure domains) are formed due to the magneto-elastic effect. The magneto-elastic effect is a phenomenon that upon application of tensile stress, a grain-oriented electrical steel sheet becomes energetically stable in the direction of the tensile stress, and upon application of compressive stress, it becomes energetically stable in the direction orthogonal to the compressive stress.

The closure domains promote the reduction of eddy current losses. On the other hand, the hysteresis loss will increase as a result of the movement of magnetic domain walls due to magnetization being pinned by the strain.

When a closure domain with magnetization (magnetic moment) in the direction orthogonal to the rolling direction (sheet transverse direction) is magnetized in the rolling direction, and if the anisotropy in the rolling direction due to magnetization prevails over the anisotropy in the sheet transvers direction due to compressive stress, the magnetization (magnetic moment) turns in the rolling direction, and the annihilation of closure domains will occur as mentioned above. Grain-oriented electrical steel sheets elongate in the rolling direction and contract in the sheet transverse direction because they are deformed to extend in the direction of magnetization. After magnetizing the steel sheet until the closure domains annihilate, magnetization in the rolling direction is weakened, i.e., the steel sheet is magnetized in the direction 180° opposite to the direction in which the steel sheet was initially magnetized. Then, the anisotropy in the rolling direction due to magnetization decreases, and the anisotropy in the sheet transverse direction due to compressive stress becomes dominant again, resulting in closure domains being generated again. The grain-oriented electrical steel sheet then elongates in the sheet transverse direction and contracts in the rolling direction.

In other words, under AC magnetization in actual use of the transformer, the direction of magnetization to the extent described above is reversed according to frequency, and the steel sheet undergoes repeated elongation and contraction as described above. This is called magnetostrictive vibration, and although the amplitude of this vibration is small, expressed in µm/m, when the grain-oriented electrical steel sheet is used as the iron core of a transformer, the propagation of this magnetostrictive vibration results in noise that is emitted to the outside world. Because of this action, the presence of closure domains causes the noise to increase.

The present inventors focused on the relationship between magnetostrictive vibration of steel sheets and magnetic domains, and further detailed investigation revealed that magnetostrictive vibration of steel sheets includes not only the generation and annihilation behavior of closure domains as mentioned above, but also a component of magnetization rotation caused by the displacement of crystal orientation from the rolling direction.

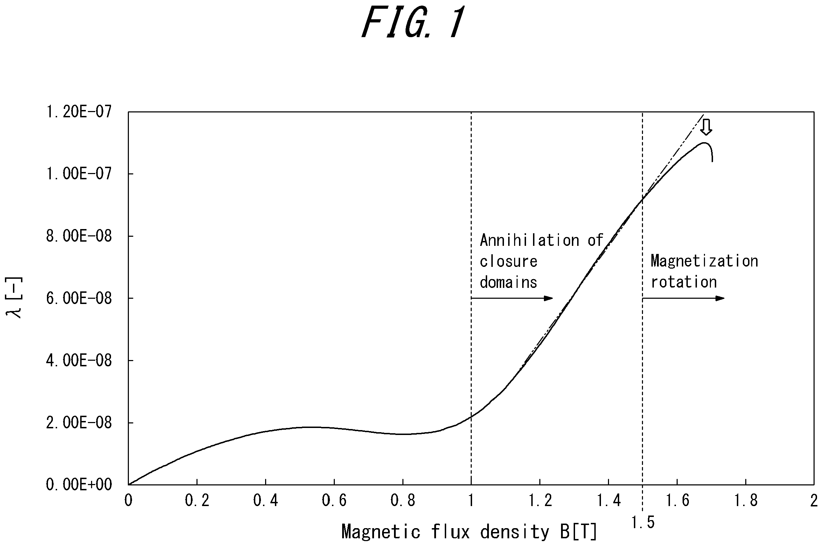

Of the above investigations, FIG. 1 illustrates the effect of magnetic domains on the butterfly curve with the maximum excitation magnetic flux density B ranging from 0 T to 1.7 T, obtained by magnetic domain observation. As seen in FIG. 1, the annihilation of closure domains begins when the excitation magnetic flux density reaches 1.0 T or more, and when the magnetic flux density exceeds 1.5 T, the slope of the butterfly curve begins to decrease because the elongation of the steel sheet due to the loss of closure domains is combined with the contraction of the steel sheet due to magnetization rotation. In other words, for a magnetic flux density-magnetostriction waveform (butterfly curve) with the maximum excitation magnetic flux density B of 1.5 T or more, the present inventors found that the amount of steel sheet elongation Δλ (hereinafter simply Δλ) with the magnetic flux density B ranging from 1.0 T to 1.5 T corresponds well to the total amount of closure domains.

In other words, the distribution of closure domains can be estimated very accurately from this Δλ value, the length of the closure domains in the rolling direction observed from the steel sheet surface (i.e., a closure domain width), and the interval between the closure domains introduced into the steel sheet (i.e., the number of lines of closure domains). Based on this estimation, it was revealed that by controlling the closure domain width and the number of lines of closure domains within the appropriate ranges, it is possible to produce a grain-oriented electrical steel sheet with both lower iron loss and lower noise than before.

Therefore, the present inventors conducted further studies to investigate the appropriate ranges of Δλ and closure domain width, and the appropriate range of the interval at which closure domains are formed (also referred to herein as the "formation interval of closure domains"), respectively.

The following is a description of the experimental results that led to the completion of the present disclosure.

### (Experiment 1)

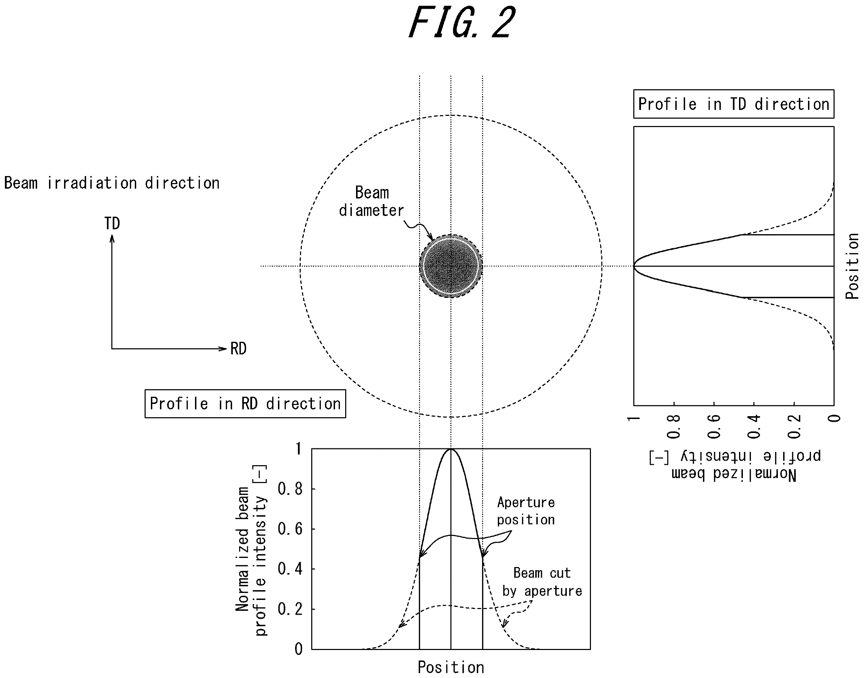

First, the magnetic domain refining treatment was performed by laser beam irradiation with a profile that was arranged to have a steep energy distribution by cutting off beam regions with energy intensity below a certain level with respect to the maximum intensity, as illustrated in FIG. 2.

For the laser irradiation conditions, a 0.23-mm-thick strip of a grain-oriented electrical steel sheet produced by a known method was irradiated with laser beam with a Gaussian-shaped profile at various power outputs. In this case, laser beam with a beam diameter (i.e., full width at half maximum) of 20 µm, 100 µm, or 200 µm was used, and passed through an aperture with a hole diameter of 8 mm, 10 mm, or 12 mm placed just before the lens for converging the laser beam (distance from the converging lens: 20 mm), with the profile illustrated in FIG. 2, and the irradiation interval was set to 5 mm. For the irradiation beam, beam regions where energy was 30 % or less of the maximum intensity value were cut off.

As used herein, laser beam with a Gaussian-shaped profile refers to a laser beam such that the intensity distribution (profile) obtained by scanning the laser beam in a certain direction with respect to a profiler with a linear slit is a Gaussian distribution.

A portion of the strip of a grain-oriented electrical steel sheet thus obtained was cut out, and the magnetostrictive vibration waveform when the strip was sinusoidally AC magnetized at 1.5 T and 50 Hz was measured using a laser Doppler magnetostrictive vibrometer to obtain a butterfly curve.

In addition, using a commercially available magnetic viewer, the magnetic domain pattern on the steel sheet surface was transferred and the width of the closure domains formed in the direction across the rolling direction was measured.

Furthermore, a three-phase transformer (iron core weight: 500 kg) was fabricated using a grain-oriented electrical steel sheet sample subjected to the magnetic domain refining treatment, and the iron loss property was measured when the magnetic flux density at the iron core legs was 1.7 T at the frequency of 50 Hz. The iron loss properties at 1.7 T and 50 Hz were measured using a wattmeter to determine the no-load loss. At the same time, this model transformer was excited in a soundproof room at the maximum magnetic flux density Bm of 1.7 T and the frequency of 50 Hz, and the noise level (dBA) was measured using a sound level meter.

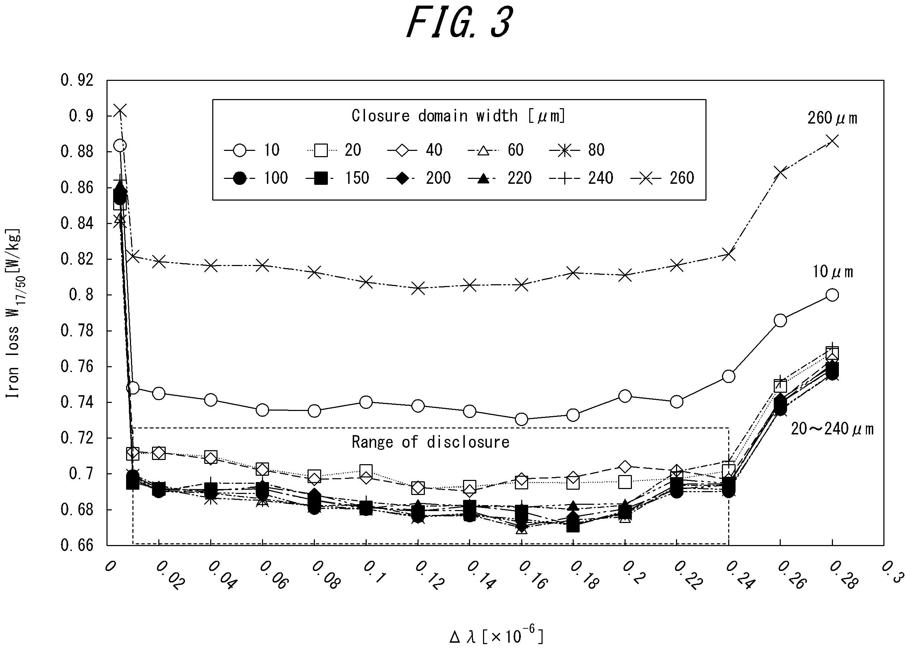

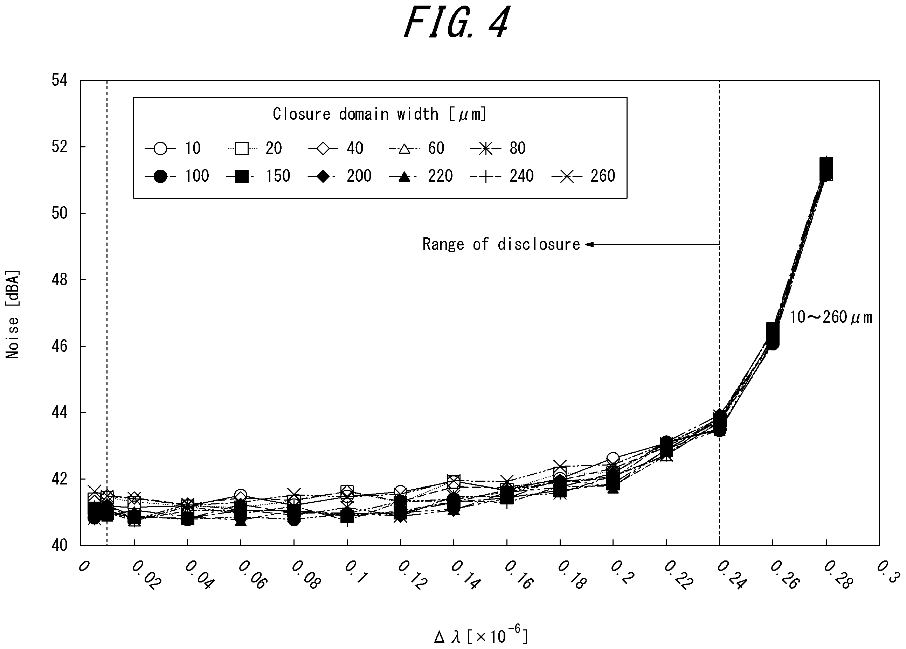

As a result of the above experiment, the relationship between Δλ and closure domain width and the iron loss W_{17/50} is illustrated in FIG. 3, and the relationship between Δλ and closure domain width and the transformer noise level is illustrated in FIG. 4.

As seen in FIG. 3, a high iron-loss-reducing effect can be obtained in a case where Δλ is in the range of 0.010 × 10⁻⁶ to 0.240 × 10⁻⁶ and the closure domain width is in the range of 20 µm to 240 µm. In a case where Δλ is in the range of 0.010 × 10⁻⁶ to 0.200 × 10⁻⁶ and the closure domain width is in the range of 50 µm to 240 µm, a particularly high iron-loss-reducing effect can be obtained.

As seen in FIG. 4, the transformer noise shows almost no change for the closure domain width in the range of 10 µm to 260 µm, while the transformer noise shows a sharp deterioration when Δλ exceeds 0.240 × 10⁻⁶. From the above experimental results, the present inventors found that setting Δλ in the range of 0.010 × 10⁻⁶ to 0.240 × 10⁻⁶ and the closure domain width in the range of 20 µm to 240 µm is highly effective in obtaining low iron loss and low noise effects. In particular, the present inventors found that when Δλ is in the range of 0.010 × 10⁻⁶ to 0.200 × 10⁻⁶ and the closure domain width in the range of 50 µm to 240 µm, an even better iron-loss-reducing effect is achieved.

### (Experiment 2)

The proper range of the formation interval of closure domains was then investigated.

A sample was prepared by irradiating a 0.23-mm-thick strip of a grain-oriented electrical steel sheet produced by a known method with a laser beam having a Gaussian profile in a linear pattern in the sheet transverse direction, with the power output adjusted so that Δλ was 0.100 × 10⁻⁶. In this case, laser beam with a beam diameter (i.e., full width at half maximum) of 100 µm was used, and the beam was passed through an aperture with a hole diameter of 10 mm located at a position just before the laser beam was incident on the converging lens (distance from the steel sheet: 20 mm) to cut off the beam regions where energy was 30 % or less of the maximum intensity value, and the profile illustrated in FIG. 2 was obtained. The laser beam with this profile was linearly irradiated along the sheet transverse direction by varying the irradiation interval in the rolling direction from 1 mm to 12 mm, and samples were prepared.

A portion of each strip of a grain-oriented electrical steel sheet thus obtained was cut out, and the magnetostrictive vibration waveform when the strip was sinusoidally AC magnetized at 1.5 T and 50 Hz was measured using a laser Doppler magnetostrictive vibrometer to obtain a butterfly curve. Furthermore, using a commercially available magnetic viewer, the magnetic domain pattern on the steel sheet surface was transferred and the width of the closure domains formed in the direction across the rolling direction was measured. As a result, the closure domain width was determined to be 120 µm.

Furthermore, a three-phase transformer (iron core mass: 500 kg) was fabricated using each grain-oriented electrical steel sheet sample subjected to the magnetic domain refining treatment, and the iron loss properties were measured when the magnetic flux density at the iron core legs was 1.7 T at the frequency of 50 Hz. This iron loss property at 1.7 T and 50 Hz was measured using a wattmeter to determine the no-load loss. At the same time, this model transformer was excited in a soundproof room at the maximum magnetic flux density Bm of 1.7 T and the frequency of 50 Hz, and the noise level (dBA) was measured using a sound level meter.

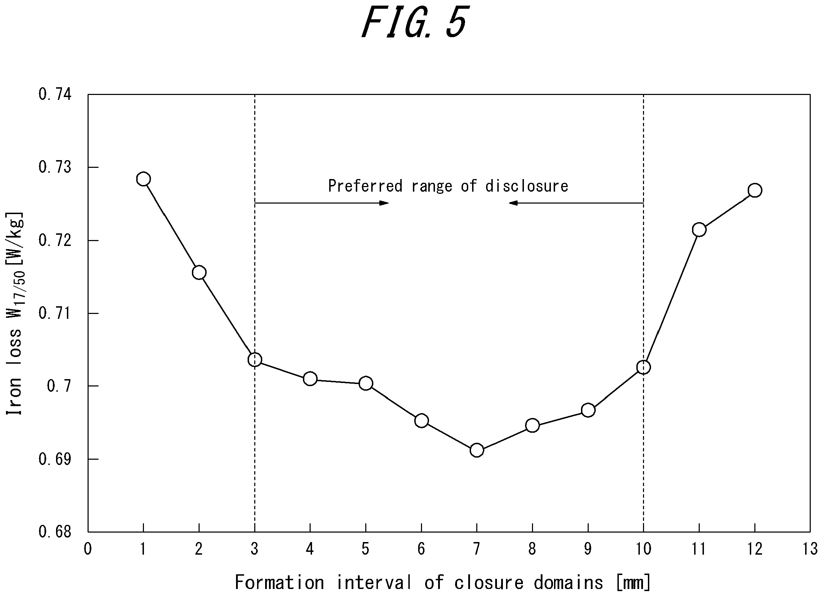

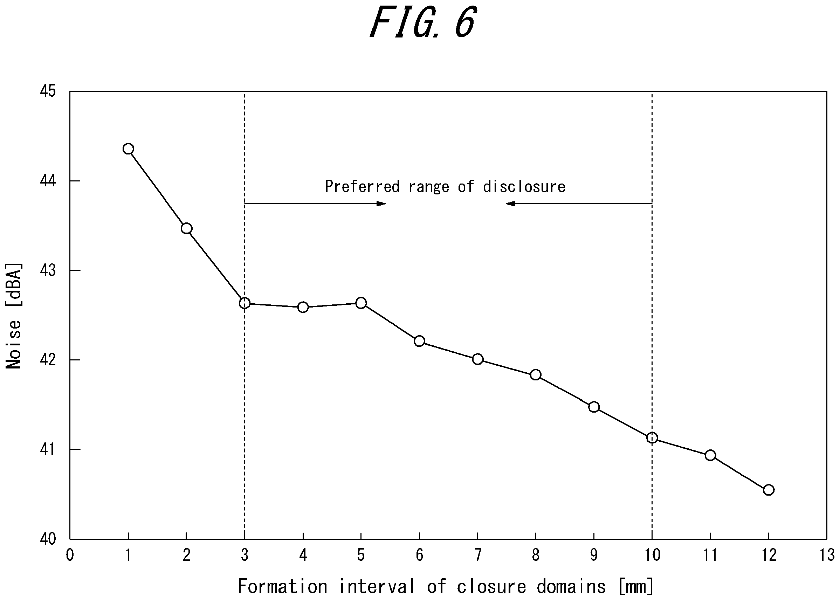

FIG. 5 illustrates the relationship between the formation interval of closure domains and the iron loss W_{17/50}; and FIG. 6 illustrates the relationship between the closure domain formation interval and the transformer noise level. As seen in FIG. 5, more suitable iron loss reduction can be confirmed in the range where the formation interval of closure domains was 3 mm or more and 10 mm or less.

As seen in FIG. 6, it was also confirmed that noise tends to become louder as the formation interval of closure domains narrows. Noise was even louder especially when the closure domain formation interval was less than 3 mm. As described above, it was found that the effect of reducing both iron loss and noise is achieved more significantly when the formation interval of closure domains is 3 mm or more and 10 mm or less.

The present disclosure was completed after further study based on such findings, and primary features thereof are as follows.
1. A grain-oriented electrical steel sheet comprising: a thermal strain region extending linearly in a direction across a rolling direction; and a closure domain within the thermal strain region, wherein the grain-oriented electrical steel sheet has a magnetic flux density B-magnetostriction waveform λ, referred to as a butterfly curve, when excited to 1.5 T or more, such that an amount of steel sheet elongation (Δλ) with a magnetic flux density B ranging from 1.0 T to 1.5 T is 0.010 × 10⁻⁶ or more and 0.240 × 10⁻⁶ or less, and a length of the closure domain in the rolling direction, referred to as a closure domain width, is 20 µm or more and 240 µm or less.
2. The grain-oriented electrical steel sheet according to aspect 1, wherein the amount of steel sheet elongation (Δλ) is 0.010 × 10⁻⁶ or more and 0.200 × 10⁻⁶ or less and the closure domain width is 50 µm or more and 240 µm or less.
3. The grain-oriented electrical steel sheet according to aspect 1 or 2, wherein a formation interval of the closure domains is 3 mm or more and 10 mm or less.

### (Advantageous Effect)

According to the present disclosure, it is possible to provide a grain-oriented electrical steel sheet that effectively reduces energy loss and noise in transformers.

### BRIEF DESCRIPTION OF THE DRAWINGS

In the accompanying drawings:
FIG. 1 illustrates the effect of magnetic domains on a butterfly curve with the maximum excitation magnetic flux density B ranging from 0 T to 1.7 T;
FIG. 2 is a schematic diagram illustrating an example of a suitable beam profile when applying an aperture;
FIG. 3 illustrates the relationship between Δλ and closure domain width and the iron loss W_{17/50};
FIG. 4 illustrates a relationship between Δλ and closure domain width and the transformer noise level;
FIG. 5 illustrates a relationship between the formation interval of closure domains and the iron loss W_{17/50};
FIG. 6 illustrates a relationship between the formation interval of closure domains and the transformer noise level; and
FIG. 7 is a schematic diagram illustrating an example of a suitable beam profile when applying a slit.

### DETAILED DESCRIPTION

The following is a detailed description of a suitable embodiment of the present disclosure.

However, the present disclosure is not limited only to the configuration disclosed in this embodiment, and various changes can be made without departing from the spirit of the present disclosure.
[Grain-oriented electrical steel sheet having a magnetic flux density B-magnetostriction waveform λ, referred to as a butterfly curve, when excited to 1.5 T or more, such that an amount of steel sheet elongation (Δλ) with a magnetic flux density B ranging from 1.0 T to 1.5 T is 0.010 × 10⁻⁶ or more and 0.240 × 10⁻⁶ or less, and a length of the closure domains in the rolling direction, referred to as a closure domain width, is 20 µm or more and 240 µm or less]

If Δλ is less than 0.010 × 10⁻⁶, the introduced strain is too small and the magnetic domain refining effect is not obtained. On the other hand, if Δλ exceeds 0.240 × 10⁻⁶, the introduced strain is excessive and the hysteresis loss increases.

If the closure domain width exceeds 240 µm, the depth of closure domains in the thickness direction becomes insufficient, which reduces the magnetic domain refining effect. On the other hand, if the closure domain width is less than 20 µm, the closure domains are too thin with respect to the rolling direction, with the result that the magnetization is not discontinuous and the magnetic domain refining effect is reduced.

Furthermore, the noise level increases rapidly when Δλ exceeds 0.240 × 10⁻⁶. This may be due to the fact that Δλ corresponds to the total amount of closure domains and the generation and annihilation of closure domains occur accordingly.

Therefore, in the present disclosure, Δλ is set in the range of 0.010 × 10⁻⁶ to 0.240 × 10⁻⁶, and the closure domain width is set to 20 µm or more and 240 µm or less. Within these ranges, excellent low iron loss and low noise effects can be obtained. Δλ is preferably 0.010 × 10⁻⁶ or more. Δλ is preferably 0.200 × 10⁻⁶ or less. The closure domain width is preferably 50 µm or more. The closure domain width is preferably 240 µm or less. This is because particularly excellent iron loss properties can be obtained within these ranges. Δλ is more preferably 0.100 × 10⁻⁶ or more. Δλ is more preferably 0.200 × 10⁻⁶ or less. The closure domain is more preferably 50 µm or more. The closure domain is more preferably 240 µm or less.

[Formation Interval of Closure Domains: 3 mm or more and 10 mm or less]

If the formation interval of closure domains is less than 3 mm, there is a concern that the total amount of closure domains will increase and hysteresis loss will deteriorate. On the other hand, if the formation interval is more than 10 mm, the magnetic domain refining capability is likely to be reduced due to the decrease in the total amount of closure domains introduced.

When the formation interval of closure domains is less than 3 mm, noise tends to increase, probably because the total amount of closure domains increases. Therefore, setting the formation interval of closure domains to 3 mm or more and 10 mm or less makes it possible to obtain the effect of reducing both iron loss and noise more significantly.

The formation interval of closure domains means the interval of irradiation of the energy beam in the rolling direction during non-heat resistant type magnetic domain refining treatment.

### • Grain-oriented Electrical Steel Sheet

A slab used as the raw material of a grain-oriented electrical steel sheet according the present disclosure may have any chemical composition as long as it allows secondary recrystallization to occur. When inhibitors are used, for example, Al and N may be included in appropriate amounts if an AlN-based inhibitor is used, or Mn and Se and/or S may be included in appropriate amounts if a MnS/MnSe-based inhibitor is used. Of course, both inhibitors can be used together.

In the case of using the above inhibitors, the contents of Al, N, S, and Se are preferably:
Al: 0.010 mass% to 0.065 mass%,
N: 0.0050 mass% to 0.0120 mass%,
S: 0.005 mass% to 0.030 mass%, and
Se: 0.005 mass% to 0.030 mass%.

Furthermore, the present disclosure can also be applied to grain-oriented electrical steel sheets without inhibitors, with limited content of Al, N, S, and Se. In this case, the contents of Al, N, S, and Se are preferably:
Al: less than 0.010 mass%,
N: less than 0.0050 mass%,
S: less than 0.0050 mass% and,
Se: less than 0.0050 mass%.

The following is a more specific description of the basic composition and optional additives of the steel material (slab) used for the grain-oriented electrical steel sheet according to the present disclosure.

### C: 0.08 mass% or less

C is added to improve the microstructure of a hot-rolled sheet. However, if the C content exceeds 0.08 mass%, decarburization to 50 mass ppm or lower, where magnetic aging does not occur, becomes difficult during the manufacturing process. Therefore, the C content is desirably 0.08 mass% or less. Since secondary recrystallization occurs even in a steel material that does not contain C, there is no need to set a specific lower limit for C content. Therefore, the C content may be 0 mass%.

### Si: 2.0 mass% to 8.0 mass%

Si is an effective element in increasing the electrical resistance of steel and reducing iron loss. To this end, the Si content is preferably 2.0 mass% or more. On the other hand, if the Si content exceeds 8.0 mass%, workability and sheet passing performance deteriorate, and magnetic flux density also decreases. Therefore, the Si content is desirably 8.0 mass% or less. More preferably, the lower limit is 2.5 mass% and the upper limit is 7.0 mass%.

### Mn: 0.005 mass% to 1.0 mass%

Mn is a necessary element in improving hot workability. To this end, the Mn content is preferably 0.005 mass% or more. On the other hand, if the Mn content exceeds 1.0 mass%, magnetic flux density deteriorates. Therefore, the Mn content is preferably 1.0 mass% or less. More preferably, the lower limit is 0.01 mass% and the upper limit is 0.9 mass%.

In addition to the above basic components, at least one of the following optionally added components, which are known to be effective in improving magnetic properties, can be contained in the present disclosure as appropriate:
Ni: 0.03 mass% to 1.50 mass%,
Sn: 0.01 mass% to 1.50 mass%,
Sb: 0.005 mass% to 1.50 mass%,
Cu: 0.03 mass% to 3.0 mass%,
P: 0.03 mass% to 0.50 mass%,
Mo: 0.005 mass% to 0.10 mass%, and
Cr: 0.03 mass% to 1.50 mass%.

Among the above optionally added components, Ni is an effective element in improving the magnetic properties of a hot-rolled sheet by improving its microstructure. If the Ni content is less than 0.03 mass%, the contribution to magnetic properties is small. On the other hand, if the content exceeds 1.50 mass%, secondary recrystallization becomes unstable and magnetic properties deteriorate. Therefore, the Ni content is preferably 0.03 mass% or more. The Ni content is preferably 1.50 mass% or less.

The other optionally added components Sn, Sb, Cu, P, Mo, and Cr are also elements that improve magnetic properties, as is Ni. For any of these components, if the content is less than the lower limit, the addition effect is not sufficient, and if the content exceeds the upper limit, the growth of secondary recrystallized grains is suppressed and the magnetic properties deteriorate. Therefore, the above content ranges are preferred, respectively. Other than the above components, the balance is Fe and inevitable impurities.

In the above-described slab components, C is decarburized during primary recrystallization annealing, and Al, N, S, and Se are purified during secondary recrystallization annealing. Accordingly, the contents of these components are reduced to the inevitable impurity level in the steel sheet after secondary recrystallization annealing (i.e., final product of a grain-oriented electrical steel sheet).

For example, the grain-oriented electrical steel sheet disclosed herein can be produced by the following procedure (excluding the magnetic domain refining process).

Specifically, a steel material (slab) for a grain-oriented electrical steel sheet having the above-described composition is subjected to hot rolling to obtain a hot-rolled sheet, followed by hot-rolled sheet annealing if necessary. The hot-rolled sheet is then subjected to cold rolling once, or twice or more with intermediate annealing in between, and finished into a steel strip having a final sheet thickness. The steel strip is then subjected to decarburization annealing, coated with an annealing separator composed mainly of MgO, coiled, and subjected to final annealing for the purpose of secondary recrystallization and formation of a forsterite film. After the final annealing, the steel strip is subjected to flattening annealing, and then baked with an insulating coating by, for example, forming a magnesium phosphate tension coating thereon, to thereby obtain a product sheet (grain-oriented electrical steel sheet (excluding the magnetic domain refining process)).

The product sheet thus obtained is subjected to non-heat-resistant magnetic domain refining to obtain the grain-oriented electrical steel sheet according to the present disclosure (magnetic domain refining process).

The following provides a description of the non-heat-resistant type magnetic domain refining used in the magnetic domain refining process according to the present disclosure.

### • Energy Beam Irradiation Method

In the present disclosure, by using a beam with a Gaussian-shaped beam profile as the energy beam with which the steel sheet is irradiated to introduce thermal strain, the total amount of closure domains can be controlled and Δλ can be kept within the specified range with high precision. In particular, by irradiating the steel sheet with a beam by cutting off the beam regions with energy below a certain level through a slit having an aperture in the rolling direction before the beam was incident on the steel sheet, Δλ can be remarkably kept within the specified range.

As used herein, the phrase "before the beam was incident on the steel sheet" means any coordinate in the energy beam path between the beam source and the point where the beam was incident on the steel sheet.

Cutting a beam portion with energy below a certain level means that beam portions with energy intensity below a certain level relative to the maximum intensity in the beam profile obtained beforehand, e.g., 40 % or less of the maximum peak intensity, are prevented from being incident on the steel sheet. The energy intensity of the beam to be cut off is up to 50 % of the maximum peak intensity.

The energy beam is not particularly limited as long as it is generally available for non-heat-resistant type magnetic domain refining treatment, such as electron beams, laser beams, and plasma flames.

### • Beam Irradiation Method to Obtain Better Properties

Another method to achieve an effect of even more significantly reducing iron loss and magnetostriction is to install a circular restriction portion (aperture) on the beam path. An aperture is placed between the beam source and the beam deflector system in the energy beam optical path to irradiate the steel sheet with a beam by cutting off the beam regions with intensity below a certain level as described above. Through the beam irradiation in this way, the beam profile shape can also be controlled in the beam irradiation direction, and as a result, the amount of strain introduced into the steel sheet can be further reduced compared to the case of using a slit. As such, more thermal strain can be introduced for a similar Δλ compared to the case of using a slit, and an even better iron-loss-reducing effect can be achieved.

### • Direction of Energy Beam Irradiation

In the present disclosure, linear strain is introduced by irradiation of energy beam such as electron beam, laser beam, or plasma flame. Linear strain is introduced by performing beam irradiation in a direction perpendicular to the rolling direction using one or more beam irradiation devices. In this case, the scanning direction of the beam is preferably in the range of 60° to 120° from the rolling direction, and more preferably 90° from the rolling direction, i.e., along the sheet transverse direction. This is because a larger displacement from the sheet transverse direction increases the amount of strain introduced into the steel sheet, resulting in degradation of the magnetostriction. As used herein, "linear" may be in the form of solid line, dotted line, or dashed line.

### • Energy Beam Irradiation Interval

The energy beam irradiation interval (distance between adjacent thermal strain regions) is preferably 3 mm or more and 10 mm or less because closure domains are formed at the energy beam irradiation points.

In implementing the present disclosure, the conditions under which the energy beam is irradiated will be described in more detail below.

### • Beam Power: 30 W or more and 10 kW or less.

A certain amount of heat input energy is required to introduce closure domains into the steel sheet, and if the beam power is less than 30 W, the amount of strain introduced is insufficient and closure domains are not formed. On the other hand, if excessive heat input exceeding 10 kW is applied, closure domains are formed in a very wide range due to heat diffusion, resulting in an increase in both iron loss and noise. From the above, the beam output is preferably 30 W or more. It is preferably 10 kW or less. More preferably, the lower limit is about 50 W and the upper limit is about 8 kW.

When an electron beam is used as the electron source, the accelerating voltage is preferably 60 kV or more and the beam current is preferably 0.5 mA or more. The accelerating voltage is preferably 300 kV or less and the beam current is preferably 40 mA or less.

### • Laser Output: 20 W or more and 500 W or less

The laser output is preferably smaller than the beam power in terms of the amount of strain introduced. This is because increasing the laser output causes an excessive amount of strain to be introduced, which increases hysteresis loss more than it reduces eddy current loss, and also increases noise. Therefore, the laser output is preferably 500 W or less. On the other hand, if the laser output is too small, there is insufficient energy to form the strain. Therefore, the laser output is preferably 20 W or more.

### • Spot Diameter: 300 µm or less

Smaller spot diameters are preferred because they can introduce strain locally. Therefore, in the present disclosure, the spot diameter of energy beam such as electron beam or laser beam is preferably 300 µm or less. It is more preferably 280 µm or less, and even more preferably 260 µm or less. As used herein, spot diameter refers to the full width at half maximum of the beam profile acquired by the slit method using a slit of 30 µm in width.

### • Degree of Vacuum in Beam Irradiation Region

The electron beam is scattered by gas molecules, causing an increase in beam diameter and halo diameter, and a decrease in energy. Therefore, the higher the degree of vacuum in the beam irradiation region, the better, and the pressure is preferably 3 Pa or lower. There is no restriction on the lower limit, yet an excessively low limit will increase the cost of vacuum pumps and other vacuum systems. Therefore, for practical purposes, the pressure is preferably 10⁻⁵ Pa or higher.

This does not apply to lasers, which can be processed in air.

### • Closure Domain Width

The width of closure domains formed on the steel sheet surface can be measured by acquiring the magnetic domain pattern on the steel sheet surface using a commercially available domain viewer, for example, MV-95 from Sigma Hi-Chemical, Inc.

### EXAMPLES

Next, the present disclosure will be described based on examples. The following examples are merely preferred examples of the present disclosure, and the present disclosure is not limited in any way by these examples. It goes without saying that the present disclosure can be implemented with modifications without departing from the spirit of the present disclosure, and such modifications are also encompassed by the technical scope of the present disclosure.

In the following examples, grain-oriented electrical steel sheet materials (slabs) having the compositions listed in Table 1 with the balance being Fe and inevitable impurities were used.

### [Table 1]

**Table 1**

| Chemical composition (mass%) | | | | | | | | |
|---|---|---|---|---|---|---|---|---|
| C | Si | Mn | Ni | Al | N | Se | S | O |
| 0.08 | 3.4 | 0.1 | 0.01 | 0.026 | 0.007 | 0.011 | 0.003 | 0.0025 |

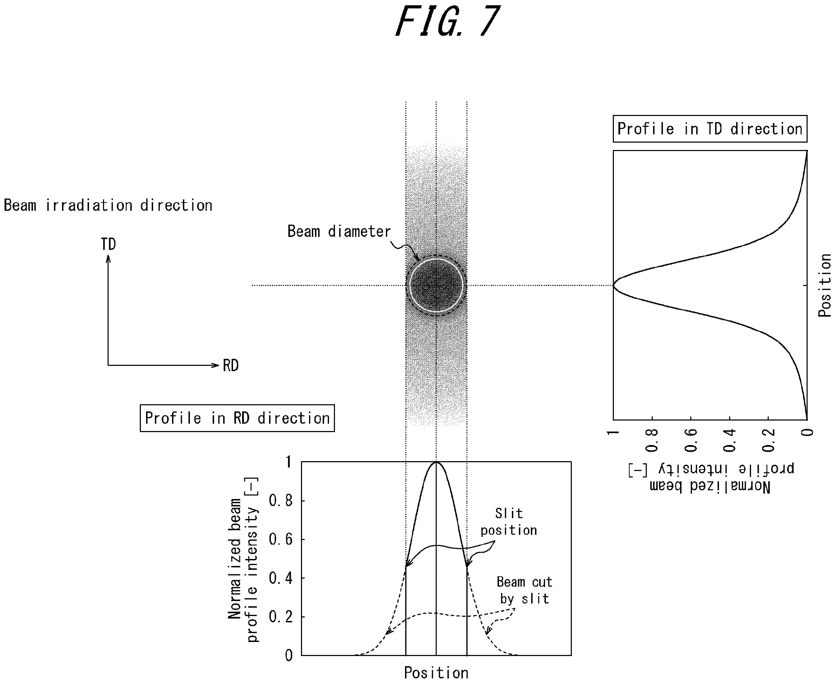

From each of the slabs with the compositions listed in Table 1, a 0.23-mm-thick strip of a grain-oriented electrical steel sheet produced by a known method was taken as a test piece. Each steel strip was irradiated with a laser beam having a Gaussian-shaped profile in the direction across the rolling direction at various power levels to prepare samples. At this time, a laser beam with a beam diameter (i.e., full width at half maximum) of 100 µm was used. A laser beam was prepared with a profile partially cut as illustrated in FIG. 7 through a slit having a slit width of 110 µm just before the laser beam was incident on the steel sheet. The present inventors also prepared a laser beam with a profile as illustrated in FIG. 2 by placing an aperture with a hole diameter 20 % smaller than the total length of the laser beam spot at that point just before the converging lens of the laser beam. Magnetic domain refining treatment was performed by linearly irradiating each steel sheet with only one of the laser beams. Furthermore, the irradiation interval of those laser beams (i.e., formation interval of closure domains) was 1 mm, 3 mm, 8 mm, 10 mm, or 12 mm.

A portion of the strip of a grain-oriented electrical steel sheet thus obtained was cut out, and the magnetostrictive vibration waveform when the strip was sinusoidally AC magnetized at 1.5 T and 50 Hz was measured using a laser Doppler magnetostrictive vibrometer to obtain a butterfly curve.

In addition, using a commercially available magnetic viewer, the magnetic domain pattern on the steel sheet surface was transferred and the width of the closure domains formed in the direction across the rolling direction was measured.

In addition, a three-phase transformer (iron core weight: 500 kg) was fabricated using a sample of each grain-oriented electrical steel sheet subjected to the magnetic domain refining treatment, and the iron loss property was measured when the magnetic flux density at the iron core legs was 1.7 T at a frequency of 50 Hz. This iron loss property at 1.7 T and 50 Hz was measured using a wattmeter to determine the no-load loss. At the same time, this model transformer was excited in a soundproof room at the maximum magnetic flux density Bm of 1.7 T and the frequency of 50 Hz, and the noise level (dBA) was measured using a sound level meter.

The results of these examples are listed in Table 2.

As seen in the table, each of the grain-oriented electrical steel sheets for which Δλ was within the disclosed range of 0.010 × 10⁻⁶ to 0.240 × 10⁻⁶ and the closure domain width was within the disclosed range of 20 µm to 240 µm exhibited lower iron loss (W_{17/50} < 0.73 W/kg) and lower noise than the comparative examples. In out examples among the experimental cases No. 51-90 in which the beam was cut through an aperture, when Δλ was 0.010 × 10⁻⁶ or more and 0.200 × 10⁻⁶ or less and the closure domain width was 50 µm or more and 240 µm or less, even more significant reduction in iron loss (W_{17/50} < 0.71 W/kg) and noise was achieved compared to the case of using a slit. In addition, in all cases, when the formation interval of closure domains was 3 mm or more and 10 mm or less, better iron-loss- and noise-reducing effects were obtained.

### [Table 2]

**Table 2**

| No. | Beam diameter [µm] | Slit width [µM] | Output [W] | Formation interval of closure domains [mm] | Δλ [×10⁻⁶] | Closure domain width [µm] | Iron loss W_{17/50} [W/kg] | Noise [dBA] | Remarks |
|---|---|---|---|---|---|---|---|---|---|
| 1 | 100 | 110 | 100 | 1 | 0.150 | 10 | 0.73 | 42.3 | Comparative example |
| 2 | 100 | 110 | 150 | 1 | 0.180 | 20 | 0.70 | 42.3 | Example |
| 3 | 100 | 110 | 200 | 1 | 0.200 | 40 | 0.69 | 42.3 | Example |
| 4 | 100 | 110 | 250 | 1 | 0.220 | 80 | 0.69 | 42.7 | Example |
| 5 | 100 | 110 | 300 | 1 | 0.240 | 100 | 0.70 | 43.0 | Example |
| 6 | 100 | 110 | 400 | 1 | 0.260 | 140 | 0.73 | 44.0 | Comparative example |
| 7 | 100 | 110 | 500 | 1 | 0.300 | 180 | 0.73 | 45.2 | Comparative example |
| 8 | 100 | 110 | 600 | 1 | 0.320 | 220 | 0.75 | 45.8 | Comparative example |
| 9 | 100 | 110 | 800 | 1 | 0.360 | 240 | 0.75 | 47.2 | Comparative example |
| 10 | 100 | 110 | 1000 | 1 | 0.400 | 260 | 0.82 | 46.9 | Comparative example |
| 11 | 100 | 110 | 100 | 3 | 0.050 | 10 | 0.73 | 42.0 | Comparative example |
| 12 | 100 | 110 | 150 | 3 | 0.060 | 20 | 0.69 | 42.0 | Example |
| 13 | 100 | 110 | 200 | 3 | 0.070 | 40 | 0.69 | 42.0 | Example |
| 14 | 100 | 110 | 250 | 3 | 0.090 | 80 | 0.68 | 42.0 | Example |
| 15 | 100 | 110 | 300 | 3 | 0.100 | 100 | 0.68 | 42.0 | Example |
| 16 | 100 | 110 | 400 | 3 | 0.150 | 140 | 0.68 | 42.0 | Example |
| 17 | 100 | 110 | 500 | 3 | 0.200 | 180 | 0.68 | 42.0 | Example |
| 18 | 100 | 110 | 600 | 3 | 0.240 | 220 | 0.69 | 42.7 | Example |
| 19 | 100 | 110 | 800 | 3 | 0.270 | 240 | 0.73 | 44.3 | Comparative example |
| 20 | 100 | 110 | 1000 | 3 | 0.300 | 260 | 0.78 | 44.9 | Comparative example |
| 21 | 100 | 110 | 100 | 8 | 0.005 | 10 | 0.79 | 41.7 | Comparative example |
| 22 | 100 | 110 | 150 | 8 | 0.010 | 20 | 0.70 | 41.7 | Example |
| 23 | 100 | 110 | 200 | 8 | 0.040 | 40 | 0.69 | 41.7 | Example |
| 24 | 100 | 110 | 250 | 8 | 0.060 | 80 | 0.68 | 41.7 | Example |
| 25 | 100 | 110 | 300 | 8 | 0.080 | 100 | 0.68 | 41.7 | Example |
| 26 | 100 | 110 | 400 | 8 | 0.100 | 140 | 0.68 | 41.7 | Example |
| 27 | 100 | 110 | 500 | 8 | 0.140 | 180 | 0.68 | 41.7 | Example |
| 28 | 100 | 110 | 600 | 8 | 0.180 | 220 | 0.68 | 41.7 | Example |
| 29 | 100 | 110 | 800 | 8 | 0.220 | 240 | 0.69 | 42.0 | Example |
| 30 | 100 | 110 | 1000 | 8 | 0.240 | 260 | 0.74 | 42.3 | Comparative example |
| 31 | 100 | 110 | 100 | 10 | 0.002 | 10 | 0.79 | 41.3 | Comparative example |
| 32 | 100 | 110 | 150 | 10 | 0.006 | 20 | 0.76 | 41.3 | Comparative example |
| 33 | 100 | 110 | 200 | 10 | 0.010 | 40 | 0.69 | 41.3 | Example |
| 34 | 100 | 110 | 250 | 10 | 0.040 | 80 | 0.69 | 41.3 | Example |
| 35 | 100 | 110 | 300 | 10 | 0.060 | 100 | 0.68 | 41.3 | Example |
| 36 | 100 | 110 | 400 | 10 | 0.080 | 140 | 0.68 | 41.3 | Example |
| 37 | 100 | 110 | 500 | 10 | 0.120 | 180 | 0.68 | 41.3 | Example |
| 38 | 100 | 110 | 600 | 10 | 0.160 | 220 | 0.68 | 41.3 | Example |
| 39 | 100 | 110 | 800 | 10 | 0.180 | 240 | 0.69 | 41.3 | Example |
| 40 | 100 | 110 | 1000 | 10 | 0.220 | 260 | 0.74 | 41.7 | Comparative example |
| 41 | 100 | 110 | 100 | 12 | 0.001 | 10 | 0.81 | 41.3 | Comparative example |
| 42 | 100 | 110 | 150 | 12 | 0.004 | 20 | 0.77 | 41.3 | Comparative example |
| 43 | 100 | 110 | 200 | 12 | 0.008 | 40 | 0.75 | 41.3 | Comparative example |
| 44 | 100 | 110 | 250 | 12 | 0.010 | 80 | 0.70 | 41.3 | Example |
| 45 | 100 | 110 | 300 | 12 | 0.020 | 100 | 0.70 | 41.3 | Example |
| 46 | 100 | 110 | 400 | 12 | 0.040 | 140 | 0.70 | 41.3 | Example |
| 47 | 100 | 110 | 500 | 12 | 0.060 | 180 | 0.70 | 41.3 | Example |
| 48 | 100 | 110 | 600 | 12 | 0.100 | 220 | 0.70 | 41.3 | Example |
| 49 | 100 | 110 | 800 | 12 | 0.120 | 240 | 0.70 | 41.3 | Example |
| 50 | 100 | 110 | 1000 | 12 | 0.160 | 260 | 0.75 | 41.3 | Comparative example |
| 51 | 100 | 8 | 200 | 1 | 0.160 | 40 | 0.69 | 40.3 | Example |
| 52 | 100 | 8 | 250 | 1 | 0.176 | 80 | 0.68 | 40.7 | Example |
| 53 | 100 | 8 | 300 | 1 | 0.192 | 100 | 0.68 | 41.0 | Example |
| 54 | 100 | 8 | 400 | 1 | 0.208 | 140 | 0.69 | 42.0 | Example |
| 55 | 100 | 8 | 500 | 1 | 0.240 | 180 | 0.69 | 43.2 | Example |
| 56 | 100 | 8 | 600 | 1 | 0.256 | 220 | 0.70 | 43.8 | Comparative example |
| 57 | 100 | 8 | 800 | 1 | 0.288 | 240 | 0.70 | 45.2 | Comparative example |
| 58 | 100 | 8 | 1000 | 1 | 0.320 | 260 | 0.77 | 44.9 | Comparative example |
| 59 | 100 | 8 | 200 | 3 | 0.056 | 40 | 0.69 | 40.0 | Example |
| 60 | 100 | 8 | 250 | 3 | 0.072 | 80 | 0.67 | 40.0 | Example |
| 61 | 100 | 8 | 300 | 3 | 0.080 | 100 | 0.67 | 40.0 | Example |
| 62 | 100 | 8 | 400 | 3 | 0.120 | 140 | 0.67 | 40.0 | Example |
| 63 | 100 | 8 | 500 | 3 | 0.160 | 180 | 0.67 | 40.0 | Example |
| 64 | 100 | 8 | 600 | 3 | 0.192 | 220 | 0.67 | 40.7 | Example |
| 65 | 100 | 8 | 800 | 3 | 0.216 | 240 | 0.69 | 42.3 | Example |
| 66 | 100 | 8 | 1000 | 3 | 0.240 | 260 | 0.73 | 42.9 | Comparative example |
| 67 | 100 | 8 | 200 | 8 | 0.032 | 40 | 0.69 | 39.7 | Example |
| 68 | 100 | 8 | 250 | 8 | 0.048 | 80 | 0.67 | 39.7 | Example |
| 69 | 100 | 8 | 300 | 8 | 0.064 | 100 | 0.67 | 39.7 | Example |
| 70 | 100 | 8 | 400 | 8 | 0.080 | 140 | 0.67 | 39.7 | Example |
| 71 | 100 | 8 | 500 | 8 | 0.112 | 180 | 0.67 | 39.7 | Example |
| 72 | 100 | 8 | 600 | 8 | 0.144 | 220 | 0.67 | 39.7 | Example |
| 73 | 100 | 8 | 800 | 8 | 0.176 | 240 | 0.68 | 40.0 | Example |
| 74 | 100 | 8 | 1000 | 8 | 0.192 | 260 | 0.71 | 40.3 | Comparative example |
| 75 | 100 | 8 | 200 | 10 | 0.008 | 40 | 0.71 | 39.3 | Comparative example |
| 76 | 100 | 8 | 250 | 10 | 0.032 | 80 | 0.68 | 39.3 | Example |
| 77 | 100 | 8 | 300 | 10 | 0.048 | 100 | 0.67 | 39.3 | Example |
| 78 | 100 | 8 | 400 | 10 | 0.064 | 140 | 0.67 | 39.3 | Example |
| 79 | 100 | 8 | 500 | 10 | 0.096 | 180 | 0.67 | 39.3 | Example |
| 80 | 100 | 8 | 600 | 10 | 0.128 | 220 | 0.67 | 39.3 | Example |
| 81 | 100 | 8 | 800 | 10 | 0.144 | 240 | 0.68 | 39.3 | Example |
| 82 | 100 | 8 | 1000 | 10 | 0.176 | 260 | 0.71 | 39.7 | Comparative example |
| 83 | 100 | 8 | 200 | 12 | 0.006 | 40 | 0.73 | 39.3 | Comparative example |
| 84 | 100 | 8 | 250 | 12 | 0.008 | 80 | 0.70 | 39.3 | Comparative example |
| 85 | 100 | 8 | 300 | 12 | 0.016 | 100 | 0.69 | 39.3 | Example |
| 86 | 100 | 8 | 400 | 12 | 0.032 | 140 | 0.69 | 39.3 | Example |
| 87 | 100 | 8 | 500 | 12 | 0.048 | 180 | 0.69 | 39.3 | Example |
| 88 | 100 | 8 | 600 | 12 | 0.080 | 220 | 0.69 | 39.3 | Example |
| 89 | 100 | 8 | 800 | 12 | 0.096 | 240 | 0.69 | 39.3 | Example |
| 90 | 100 | 8 | 1000 | 12 | 0.128 | 260 | 0.71 | 39.3 | Comparative example |

## Claims

1. A grain-oriented electrical steel sheet comprising:
a thermal strain region extending linearly in a direction across a rolling direction; and
a closure domain within the thermal strain region, wherein
the grain-oriented electrical steel sheet has a magnetic flux density B-magnetostriction waveform λ, referred to as a butterfly curve, when excited to 1.5 T or more, such that an amount of steel sheet elongation (Δλ) with a magnetic flux density B ranging from 1.0 T to 1.5 T is 0.010 × 10⁻⁶ or more and 0.240 × 10⁻⁶ or less, and a length of the closure domain in the rolling direction, referred to as a closure domain width, is 20 µm or more and 240 µm or less.

2. The grain-oriented electrical steel sheet according to claim 1, wherein the amount of steel sheet elongation (Δλ) is 0.010 × 10⁻⁶ or more and 0.200 × 10⁻⁶ or less and the closure domain width is 50 µm or more and 240 µm or less.

3. The grain-oriented electrical steel sheet according to claim 1 or 2, wherein a formation interval of the closure domains is 3 mm or more and 10 mm or less.
